# EUROPÄISCHE PATENTSCHRIFT

(11) **EP 1 084 992 B1**
(45) Veröffentlichungstag und Bekanntmachung des Hinweises auf die Patenterteilung: **21.04.2004**
(21) Anmeldenummer: 00118170.0
(22) Anmeldetag: 30.08.2000
(51) Int. Cl.: C01G 25/02, C03C 17/25, C23C 18/12

(54) **Verfahren zur Abscheidung von Zirkonoxid-Schichten unter Verwendung von löslichen Pulvern**
Method for the deposition of zirconia layers by using soluble powders
Procédé pour la deposition des couches de ZrO2 en utilisant des pulvres solubles

(30) Priorität: 13.09.1999 DE 19943789
(43) Veröffentlichungstag der Anmeldung: 21.03.2001
(73) Patentinhaber: Fraunhofer-Gesellschaft zur Förderung der angewandten Forschung e.V., 80686 München (DE)
(72) Erfinder: Löbmann, Peer, Dr., 97074 Würzburg (DE); Glaubitt, Walther, 97276 Margetshöchheim (DE); Sporn, Dieter, 97074 Würzburg (DE)
(74) Vertreter: Albrecht, Thomas, Dr.

(56) Entgegenhaltungen:
- EP-A- 0 348 288
- EP-A- 0 358 338
- EP-A- 0 535 897
- EP-A- 0 545 258
- US-A- 5 674 624

## Beschreibung

Die Erfindung betrifft ein Verfahren zur Abscheidung von Zirkonoxid (ZrO₂)-Schichten auf beliebigen Substraten. Insbesondere betrifft die Erfindung ein Sol-Gel-Verfahren, bei dem zunächst ein lösliches Pulver hergestellt wird, das in vielen Lösungsmitteln und Lösungsmittelgemischen wieder aufgelöst werden kann. Die aus dem Pulver hergestellte Beschichtungslösung kann bei der Herstellung unter anderem von Zirkonoxidschichten auf beliebigen Substraten verwendet werden.

Das technische Interesse an ZrO2-Schichten zielt hauptsächlich auf deren Einsatz als Korrosionsschutzschichten für Stahl bei hohen Temperaturen oder gegenüber aggressiven Medien ab. Dies ist beispielsweise in R. Di Maggio, P. Scardi und A. Tomasi, Material Engineering, 5,1 13-23 (1994); M. Atik und M.A. Aegerter, Mat. Res. Soc. Symp. Proc. Vol. 271 (1992) und M. Anast, J.M. Bell, T.J. Bell und B. Ben-Nissan, J. Mat. Sci. Let. 11 (1992) beschrieben.

Gegenüber physikalischen oder physikalisch/chemischen Abscheidungsmethoden wie Sputtern, Verdampfen, chemical vapor deposition und metal-organic decomposition bietet die naßchemische Herstellung über den Sol-Gel-Prozeß eine Vielzahl von Vorteilen: Es sind keine kostenaufwendigen Beschichtungsapparaturen mit Vakuumtechnik erforderlich, es lassen sich leicht große Flächen beschichten, und auch die Innenseite von zylindrischen Substraten ist für Beschichtungslösungen gut zugänglich. Die notwendigen Prozeßtemperaturen sind im Vergleich zu klassischen oxidkeramischen Verfahren niedrig, was die Beschichtung von Metallen oder Glassubstraten erlaubt. Solche Verfahren sind beispielsweise in Sol-Gel Science, The Physics and Chemistry of Sol-Gel Processing (Academic Press, Boston, 1990) beschrieben.

Die DE 197 44 630 betrifft ein Verfahren zur Herstellung von piezoelektrischen Bauelementen, bei dem in einem ersten Schritt eine lagerfähige feste Vorstufe eines Beschichtungs-Sols aus einem wasserhaltigen Bleisalz, Zirkonium- und Titanalkoholat unter Verwendung eines Komplexbildners und Durchführung einer Hydrolysereaktion und Abziehen der festen Bestandteile im Vakuum erhalten wird. Die genaue Herstellung dieser festen Vorstufe wird in diesem Dokument jedoch nicht beschrieben.

Beim Sol-Gel-Verfahren eingesetzte Beschichtungslösungen werden in der Regel aus Metall- und Übergangsmetallalkoholaten hergestellt. Da diese Verbindungen nicht hydrolysestabil sind, ist deren Lagerfähigkeit unter Normalbedingungen begrenzt. Auch die chemische Modifikation der Alkoxide durch Komplexbildner führt nicht immer zu einer für industrielle Anwendungen befriedigenden Stabilisierung der Lösungen.

Der Erfindung liegt daher die Aufgabe zugrunde, ein Verfahren zur Abscheidung von Zirkonoxid-Schichten bereitzustellen, das die vorgenannten Nachteile nicht aufweist. Der Erfindung liegt weiterhin die Aufgabe zugrunde, ein Verfahren für die Abscheidung von ZrO₂ bereitzustellen, welche die Abscheidung mit einer Schichtdicke über 150 nm innerhalb eines Beschichtungsschrittes ermöglicht. Dabei soll das Verfahren die großflächige Beschichtung von Substraten unterschiedlicher Zusammensetzung (verschiedene Gläser, keramische Substrate, Stahl) und variabler Geometrie (Flachproben, Rohre) erlauben.

Gegenstand der Erfindung ist ein Verfahren zur Herstellung von Zirkonoxid-Schichten, welches die folgenden Stufen umfaßt:
(i) Herstellung eines löslichen, zirkonhaltigen Pulvers durch:
   (a) Umsetzung eines Zirkonalkoholats der allgemeinen Formel Zr(OR)₄, in der die Reste R gleich oder verschieden sind und geradkettige, verzweigte oder cyclische Alkyl- oder Alkenylreste mit 1 bis 10 Kohlenstoffatomen darstellen, die gegebenenfalls ein oder mehrere Carbonyl- und/oder Ester- und/oder Carboxylfunktionen aufweisen, mit einer oder mehreren polaren Verbindungen mit komplexierenden, chelatisierenden Eigenschaften,
   (b) Erhitzen der Lösung,
   (c) Versetzen der Lösung mit Wasser, gegebenenfalls in Anwesenheit eines Katalysators,
   (d) Einengen der Lösung bis zum Erhalten eines Pulvers,
(ii) Lösen des Pulvers unter Bildung eines Sols,
(iii) Beschichtung eines Substrats mit dem Sol, und
(iv) Tempern des beschichteten Substrats.

Gemäß einer bevorzugten Ausführungsform dieses Verfahrens werden Zirkonalkoholate der allgemeinen Formel Zr(OR)₄ eingesetzt, in der R für einen geradkettigen oder verzweigten Alkylrest mit 2 bis 6 Kohlenstoffatomen steht. Des weiteren ist es bevorzugt, wenn sich einer oder mehrere Reste OR der vorgenannten Formel von Oxoestern, β-Diketonen, Carbonsäuren, Ketocarbonsäuren oder Ketoalkoholen ableiten. Besonders bevorzugt ist es, wenn sich der Rest OR von Acetylaceton ableitet. Beispiele für geeignete Zirkonalkoholate sind Zr(OEt)₄, Zr(Oi-Pr)₄, Zr(On-Pr)₄ und Zr(AcAc)₂(Oi-Pr)₂.

Anstatt direkt eine Beschichtungslösung zu synthetisieren, wird erfindungsgemäß zunächst ein lösliches zirkonhaltiges Pulver hergestellt. Dabei wird ein Zirkonalkoholat mit einer polaren, komplexierenden und chelatisierenden Verbindung umgesetzt. Solche Verbindungen sind beispielsweise Diketone, β-Ketoester, Acetylaceton, Glykolether, Diole, mehrwertige Alkohole, Aminoalkohole, Glycerin, Hydroxydiole, Aminothiole, Dithiole, Diamine oder Mischungen derselben.

Besonders bevorzugt ist die Verwendung von Diketonen, insbesondere von 1,3-Diketonen, wie Acetylaceton.

Die polare komplexierende und chelatisierende Verbindung wird bei dem erfindungsgemäßen Verfahren in einer Menge von 0,5 bis 20 mol, vorzugsweise 0,5 bis 3 mol/mol, Zirkonalkoholat eingesetzt.

Nach der Umsetzung des Zirkonalkoholats mit der polaren komplexierenden und chelatisierenden Verbindung wird die erhaltene Lösung auf eine Temperatur im Bereich von Raumtemperatur bis Siedepunkt des Lösungsmittels, vorzugsweise auf 80 bis 100°C über einen Zeitraum bis zu 24 Stunden, vorzugsweise über .einen Zeitraum von 0,5 bis 2 Stunden, erhitzt.

Anschließend versetzt man die Lösung mit einer Menge von 0,5 bis 20, vorzugsweise 1 bis 3 mol H₂O pro Mol Zirkonalkoholat, gegebenenfalls in Gegenwart eines Katalysators (H₃O⁺, OH⁻) bzw. verdünnten anorganischen oder organischen Säuren oder Laugen, wie HNO₃, HCl, NaOH oder NH₃, bzw. verdünnten Lösungen von Metallsalzen, wie NaBF₄, und engt das Gemisch vorzugsweise unter reduziertem Druck ein. Dabei wird ein pulverförmiger Feststoff erhalten, der einen Zirkonoxidgehalt von 30 bis 55 Gew.-% aufweist.

Das erfindungsgemäße Pulver ist unbegrenzt an Luft lagerfähig.

Das erfindungsgemäße Pulver kann in zahlreichen Lösungsmitteln oder Lösungsmittelgemischen wieder gelöst und somit zur Herstellung einer Beschichtungslösung zur Abscheidung von Zirkonoxid-Schichten verwendet werden, die ebenfalls Gegenstand der Erfindung ist. Geeignete Lösungsmittel sind Alkohole, Diole, Diolether, Amine, Wasser und Gemische davon. Durch die Wahl der Lösungsmittel bzw. Lösungsmittelgemische lassen sich wichtige Eigenschaften der Beschichtungslösung, wie Feststoffgehalt und Viskosität, gezielt einstellen und auf das Beschichtungsverfahren und Substrat abstimmen.

Geeignete Alkohole sind aliphatische Alkohole, insbesondere Methanol, Ethanol, Isopropanol und Butanol.

Geeignete Diolether sind z.B. Methoxyethanol, Butoxyethanol oder Isopropoxyethanol.

Geeignete Diole sind solche der allgemeinen Formel HO(CH₂)ₙOH, in der n für eine ganze Zahl von 2 bis 8 steht, wie z.B. Ethandiol, Propandiol, Butandiol usw. Bei dem erfindungsgemäßen Verfahren können auch höherwertige Alkohole bzw. Polyole, wie z.B. Glycerin, eingesetzt werden.

Geeignete Amine sind Mono-, Di- oder Trialkylamine, deren Alkylgruppen gegebenenfalls durch eine oder mehrere OH-Gruppe(n) substituiert sein können. Bevorzugte Amine weisen die allgemeine Formel NRₓR'₃₋ₓ auf, worin R und R' gleich oder verschieden sein können und für Methyl, Ethyl, Hydroxyethyl und Wasserstoff stehen können und x eine ganze Zahl von 0 bis 3 bedeutet.

Vorzugsweise enthalten die erfindungsgemäßen Beschichtungslösungen Wasser.

Ganz besonders bevorzugt sind Beschichtungslösungen, die als Lösungsmittel ein Gemisch aus Propandiol, Triethanolamin und Wasser enthalten, wobei die besten Resultate mit Beschichtungslösungen erzielt werden, die die vorgenannten Lösungsmittel in einem Gewichtsverhältnis von 60:10:30 bei einem Feststoffgehalt von 15 % Zirkondioxid enthalten.

Ebenfalls bevorzugt sind Beschichtungslösungen, die als Lösungsmittel ein Gemisch aus 1,5-Pentandiol und Ethanol enthalten, wobei die besten Resultate mit Beschichtungslösungen erzielt werden, die die vorgenannten Lösungsmittel in einem Gewichtsverhältnis von 5/95 bis 45/55 bei einem Feststoffgehalt des Sols von 5-10 Gewichts-% bezüglich ZrO₂.

Zur Herstellung der erfindungsgemäßen Beschichtungslösung wird das Lösungsmittel bzw. Lösungsmittelgemisch mit dem zirkonhaltigen Pulver gemischt. Vorzugsweise wird dabei das Lösungsmittel vorgelegt und das Pulver portionsweise zugegeben.

Anschließend wird das Gemisch auf eine Temperatur im Bereich von Raumtemperatur bis zum Siedepunkt des Lösungsmittelgemisches, vorzugsweise im Bereich von 80 bis 100°C über einen Zeitraum von 10 bis 60 Minuten erhitzt, so daß eine kolloidale Lösung (Sol) resultiert.

Durch Zugabe von Siliciumalkoholaten zu den so hergestellten ZrO₂-Solen läßt sich die Brechzahl der Dünnschichten im Bereich zwischen 1,5 und 2,1 frei wählen. Das bevorzugte Verhältnis von Zirkonalkoholat zu Siliciumalkoholat beträgt 9:91. Geeignete Siliciumalkoholate, die beigemischt werden können, sind Siliciumalkoholate der allgemeinen Formel Si(OR)₄, in der die Reste R gleich oder verschieden sind und geradkettige, verzweigtkettige oder cyclische Alkyl- oder Alkenylreste mit 1 bis 10 Kohlenstoffatomen darstellen, die gegebenenfalls ein oder mehrere Carbonyl- und/oder Ester- und/oder Carboxylfunktionen aufweisen.

Bevorzugte Siliciumalkoholate sind Si(OEt)₄ und Si(OMe)₄.

Je nach Mischungsverhältnis von zirkonhaltigem Pulver zu Lösungsmittel bzw. Lösungsmittelgemisch beträgt der Zirkonoxidgehalt des Sols 0,1 bis 30%, vorzugsweise etwa 15% (Massenprozent).

Eine Vielzahl von Substrattypen ist durch die erfindungsgemäßen Sole sehr gut benetzbar. Durch Einfachbeschichtung und anschließendes Tempern bei einer Temperatur von 550°C lassen sich in Abhängigkeit von dem Beschichtungsverfahren ZrO₂-Schichten mit einer Dicke bis zu 0,8 µm abscheiden. Geeignete Beschichtungsverfahren sind dem Fachmann an sich bekannt und beispielsweise in Sol-Gel Science, The Physics and Chemistry of Sol-Gel Processing, Academic Press (1990) beschrieben.

Überraschenderweise ist bei Verwendung der erfindungsgemäßen Beschichtungslösung vor der thermischen Auslagerung kein Trocknungsschritt des Naßfilms notwendig. Bei Schichtdicken über 0,4 µm weisen die Schichten eine netzartige Rißstruktur auf. Überraschenderweise weisen diese Schichten eine gute Haftung selbst auf Borosilicatglas auf.

Werden den Beschichtungslösungen Hilfsstoffe wie Polyethylenglycol zugesetzt, lassen sich feine Strukturen in die Schichten einprägen (vgl. N. Toghe et al., J. Non-Cryst. Solids, 100 (1988), 501).

Weiterhin ist es möglich, Dotierung in die Zirkonoxid-Schichten dadurch einzubringen, daß entsprechende Komponenten in dem Lösungsmittel bzw. Lösungsmittelgemisch bei der Herstellung der erfindungsgemäßen Beschichtungslösung eingebracht werden. Solche Komponenten sind beispielsweise in den Lösungsmittelgemischen lösliche Verbindungen von Yttrium.

Ein wesentlicher Vorteil des erfindungsgemäßen Verfahrens sowie des dabei verwendeten zirkonhaltigen Pulvers und der daraus hergestellten Beschichtungslösung ist darin zu sehen, daß das Pulver in bezug auf ZrO₂ einen hohen Feststoffgehalt aufweist und an Luft unbegrenzt lagerfähig ist. Das Pulver löst sich sehr leicht rückstandsfrei in zahlreichen Lösungsmitteln und Lösungsmittelgemischen. Viele für das Beschichtungsverfahren wesentliche Soleigenschaften lassen sich durch die Wahl des Lösungsmittels/Lösungsmittelgemisches gezielt einstellen, ohne daß die Pulversynthese verändert werden muß. Zudem sind die mit einer Einfachbeschichtung erreichbaren Schichtdicken sehr hoch.

Die Erfindung wird durch die nachfolgenden Beispiele näher erläutert:

### Anwendungsbeispiel 1: Pulversynthese

Zu 436 g Zirkon-n-propylat (75%ig) werden 100 g Acetylaceton unter Rühren getropft. Die Lösung wird eine Stunde auf 80°C erhitzt. Nach der Zugabe von 54 g deionisiertem Wasser wird der Ansatz am Rotationsverdampfer bei reduziertem Druck eingeengt. Es resultiert ein pulverförmiger, gelbroter Feststoff mit einem Zirkonoxidgehalt von 40 Masse-%.

### Anwendungsbeispiel 2: Solherstellung

Zu 356 g einer Lösungsmittelmischung von Propandiol, Triethanolamin und Wasser in einem Massenverhältnis von 60:10:30 werden 185 g des Pulvers in kleineren Portionen gegeben. Nach Erhitzen auf 50°C für eine Stunde resultiert ein klares Sol. Der Zirkonoxidgehalt beträgt 15 Masse-%.

### Anwendungsbeispiel 3: Schichtpräparation

Die Beschichtungssole lassen sich auch auf der Innenseite von rohrartigen Substraten abscheiden, indem der Boden mit einem durchbohrten Stopfen abgeschlossen wird, das Sol eingefüllt wird und durch Ablassen bzw. Abpumpen ein wohldefinierter Naßfilm auf dem Substrat zurückbleibt. Erstaunlicherweise lassen sich bei Rohrinnenbeschichtungen bessere Resultate bei höheren Abpumpgeschwindigkeiten erzielen als bei der Beschichtung von Flachproben.

Dabei wird das Sol in ein vertikal ausgerichtetes Borosilicatrohr gefüllt, dessen untere Öffnung mit einem durchbohrten Stopfen verschlossen wurde. Durch Abpumpen erreicht man ein Absinken des Flüssigkeitsspiegels. Die resultierende Schichtdicke ist durch die Abpumpgeschwindigkeit einstellbar, bei 16 mm/min erreicht man 0,6 µm dicke keramische Schichten. Direkt nach der Beschichtung wird das Rohr in einem Umluftofen 30 Minuten auf 550°C erhitzt.

## Patentansprüche

1. Sol-Gel-Verfahren zur Herstellung von Zirkonoxid-Schichten, **dadurch gekennzeichnet, daß** es die folgenden Stufen umfaßt:
(i) Herstellung eines löslichen, zirkonhaltigen Pulvers durch:
(a) Umsetzung eines Zirkonalkoholats der allgemeinen Formel Zr(OR)₄, in der die Reste R gleich oder verschieden sind und geradkettige, verzweigte oder cyclische Alkyl- oder Alkenylreste mit 1 bis 10 Kohlenstoffatomen darstellen, die gegebenenfalls ein oder mehrere Carbonylund/oder Ester- und/oder Carboxylfunktionen aufweisen, mit einer oder mehreren polaren Verbindungen mit komplexierenden, chelatisierenden Eigenschaften,
(b) Erhitzen der Lösung,
(c) Versetzen der Lösung mit Wasser, gegebenenfalls in Anwesenheit eines Katalysators,
(d) Einengen der Lösung bis zum Erhalten eines Pulvers,
(ii) Lösen des Pulvers unter Bildung eines Sols,
(iii) Beschichtung eines Substrats mit dem Sol, und
(iv) Tempern des beschichteten Substrats.

2. Verfahren nach Anspruch 1, **dadurch gekennzeichnet, daß** man als polare Verbindung mit komplexierenden, chelatisierenden Eigenschaften Diketone, β-Ketoester, Acetylaceton, Glykolether, Diole, mehrwertige Alkohole, Aminoalkohole, Glycerin, Hydroxydiole, Aminothiole, Dithiole, Diamine oder Mischungen derselben verwendet.

3. Verfahren nach Anspruch 2, **dadurch gekennzeichnet, daß** man als polare Verbindung mit komplexierenden, chelatisierenden Eigenschaften Acetylaceton und als Zirkonalkoholat Zirkon-n-propylat verwendet.

4. Verfahren nach Ansprüchen 1 bis 3, **dadurch gekennzeichnet, daß** man das zirkonhaltige Pulver in einem Lösungsmittel, ausgewählt aus der Gruppe bestehend aus Alkoholen, Diolen, Diolethern, Aminen und Wasser oder Gemischen daraus, löst.

5. Verfahren nach Anspruch 4, **dadurch gekennzeichnet, daß** man als Lösungsmittel ein Gemisch aus Propandiol, Triethanolamin und Wasser verwendet.

6. Verfahren nach den Ansprüchen 1 bis 5, **dadurch gekennzeichnet, daß** man als Substrat Glas-, Keramik- und/oder Metall-Substrate verwendet.

7. Verfahren nach Anspruch 6, **dadurch gekennzeichnet, daß** man als Substrat Borosilicatglas verwendet.

8. Verfahren nach den Ansprüchen 1 bis 6, **dadurch gekennzeichnet, daß** man als Substrat eine Flachprobe oder ein Rohr verwendet.

9. Verfahren nach den Ansprüchen 1 bis 8, **dadurch gekennzeichnet, daß** man dem Sol Hilfsstoffe, insbesondere Polyethylenglykole, zusetzt.

10. Zirkonhaltiges Pulver zur Abscheidung von Zirkonoxid-Schichten, erhältlich durch
(a) Umsetzung eines Zirkonalkoholats mit einem Diketon,
(b) Erhitzen der Lösung,
(c) Versetzen der Lösung mit Wasser, gegebenenfalls in Anwesenheit eines Katalysators
(d) Einengen der Lösung bis zum Erhalten eines Pulvers.

11. Zirkonhaltiges Pulver nach Anspruch 10, **dadurch gekennzeichnet, daß** es einen Zirkongehalt von 30 bis 55 Gew.-% besitzt.

12. Beschichtungslösung zur Herstellung von Zirkonoxid-Schichten, umfassend eine kolloidale Lösung des zirkonhaltigen Pulvers nach Anspruch 10 oder 11 in einem Alkohol, einem Diol, einem Amin, Wasser oder Gemischen davon.

13. Beschichtungslösung nach Anspruch 12, **dadurch gekennzeichnet, daß** ihr nach dem Auflösen des zirkonhaltigen Pulvers Siliciumalkoholat der allgemeinen Formel Si(OR)₄, in der die Reste R gleich oder verschieden sind und geradkettige, verzweigtkettige oder cyclische Alkyl- oder Alkenylreste mit 1 bis 10 Kohlenstoffatomen darstellen, die gegebenenfalls ein oder mehrere Carbonyl- und/oder Esterund/oder Carboxylfunktionen aufweisen, zugesetzt worden sind.

14. Beschichtungslösung nach Anspruch 12 oder 13, **dadurch gekennzeichnet, daß** sie zusätzlich lösliche Polymere, insbesondere Polyethylenglykole, umfaßt.

15. Beschichtungslösung nach den Ansprüchen 12 bis 14, **dadurch gekennzeichnet, daß** sie 15 Gew.-% ZrO₂ enthält.

16. Beschichtungslösung nach den Ansprüchen 12 bis 15, **dadurch gekennzeichnet, daß** das Lösungsmittelgemisch Propandiol, Triethanolamin und Wasser umfaßt.

17. Beschichtungslösung nach Anspruch 16, **dadurch gekennzeichnet, daß** das Gewichtsverhältnis von Propandiol, Triethanolamin und Wasser 60:10:30 ist.

18. Beschichtungslösung nach den Ansprüchen 12-14, **dadurch gekennzeichnet, daß** das Lösungsmittelgemisch 1,5-Pentandiol und Ethanol in einem Gewichtsverhältnis von 5/95 bis 45/55 umfaßt und der Feststoffgehalt des Sols 5-10 Gewichts-% ZrO₂ beträgt.

19. Verwendung des zirkonhaltigen Pulvers nach Anspruch 10 oder 11 oder der Beschichtungslösung nach den Ansprüchen 12 bis 18 zur Herstellung mikrostrukturierter Schichten.

## Claims

1. Sol gel process for the production of zirconia layers, **characterised in that** it comprises the following steps:
(i) production of a soluble powder containing zircon by:
(a) converting a zircon alcoholate with the general formula Zr(OR)₄, in which the residues R are the same or different and constitute straight-chain, branched or cyclic alkyl or alkenyl residues with 1 to 10 carbon atoms, which possibly have one or more carbonyl and/or ester and/or carboxyl functions, with one or more polar compounds with complexing, chelating properties,
(b) heating the solution
(c) adding water to the solution, possibly in the presence of a catalyst,
(d) concentrating the solution to small volume until a powder is obtained,
(ii) dissolving the powder to form a sol,
(iii) coating a substrate with the sol, and
(iv) annealing the coated substrate.

2. Process according to Claim 1, **characterised in that** diketones, b-keto-ester, acetyl acetone, g lycol ether, d iols, m ultivalent a lcohols, a mino a lcohols, g lycerine, hydroxy diols, amino thiols, dithiols, diamines or mixtures thereof are used as the polar compound with complexing, chelating properties.

3. Process according to Claim 2, **characterised in that** acetyl acetone is used as the polar compound with complexing, chelating properties and zircon-n-propylate is used as zircon alcoholate.

4. Process according to Claims 1 to 3, **characterised in that** the powder containing zircon is dissolved in a solvent selected from the group comprising alcohols, diols, diol ethers, amines and water or mixtures thereof.

5. Process according to Claim 4, **characterised in that** a mixture of propane diol, triethanolamine and water is used as solvent.

6. Process according to Claims 1 to 5, **characterised in that** glass, ceramic and/or metal substrates are used as substrate.

7. Process according to Claim 6, **characterised in that** borosilicate glass is used as substrate.

8. Process according to Claims 1 to 6, **characterised in that** a flat sample or a tube is used as substrate.

9. Process according to Claims 1 to 8, **characterised in that** auxiliary agents, in particular polyethylene glycols, are added to the sol.

10. Powder containing zircon for the deposition of zirconia layers, which may be obtained by
(a) converting a zircon alcoholate with a diketone,
(b) heating the solution,
(c) adding water to the solution, possibly in the presence of a catalyst,
(d) concentrating the solution to small volume until a powder is obtained.

11. Powder containing zircon according to Claim 10, **characterised in that** it has a zircon content of 30 to 55% by weight.

12. Coating solution for the production of zirconia layers, comprising a colloidal solution of the power containing zircon according to Claim 10 or 11 in an alcohol, a diol, an amine, water or mixtures thereof.

13. Coating solution according to Claim 12, **characterised in that** silicon alcoholate with the general formula Si(OR)₄, in which the residues R are the same or different and constitute straight-chain, branched-chain or cyclic alkyl or alkenyl residues with 1 to 10 carbon atoms, which possibly have one or more carbonyl and/or ester and/or carboxyl functions, was added to said coating solution after dissolution of the powder containing zircon.

14. Coating solution according to Claim 12 or 13, **characterised in that** it additionally comprises soluble polymers, in particular polyethylene glycols.

15. Coating solution according to Claims 12 to 14, **characterised in that** it contains 15% by weight of ZrO₂.

16. Coating solution according to Claims 12 to 15, **characterised in that** the solvent mixture comprises propane diol, triethanolamine and water.

17. Coating solution according to Claim 16, **characterised in that** the weight ratio of propane diol, triethanolamine and water is 60:10:30.

18. Coating solution according to Claims 12-14, **characterised in that** the solvent mixture comprises 1,5-pentane diol and ethanol in a weight ratio of 5/95 to 45/55, and the solid content of the sol amounts to 5-10% by weight of ZrO₂.

19. Use of the powder containing zircon according to Claim 10 or 11 or of the coating solution according to Claims 12 to 18 for the production of microstructured layers.

## Revendications

1. Procédé du type sol-gel de production de couches d'oxyde de zirconium,
**caractérisé en ce qu'**
il comprend les étapes suivantes :
(i) production d'une poudre soluble, contenant de l'oxyde de zirconium par
(a) mise en réaction d'un alcoolate de zirconium de formule générale Zr (OR)₄ dans laquelle les restes R sont identiques ou différents et représentent des restes alkyle ou alkényle à chaîne droite, ramifiés ou cycliques, ayant de 1 à 10 atomes de carbone, qui possèdent le cas échéant une ou plusieurs fonctions carbonyle et/ou ester et/ ou carboxyle,
avec un ou plusieurs composés polaires ayant des propriétés complexantes ou chélatantes,
(b) chauffage de la solution,
(c) mélange de la solution avec de l'eau, le cas échéant en présence d'un catalyseur,
(d) concentration de la solution jusqu'à obtention d'une poudre,
(ii) dissolution de la poudre avec formation d'un sol,
(iii) revêtement d'un substrat avec le sol, et
(iv) recuit du substrat revêtu.

2. Procédé selon la revendication 1,
**caractérisé en ce que**
comme composé polaire ayant des propriétés complexantes, chélatantes, on utilise des dicétomes des β-cétoesters, l'acétylacétone, un éther de glycol, des diols, des alcools plurifonctionnels, des aminoalcools, le glycérol, des hydroxydiols, des aminothiols, des dithiols, des diamines ou des mélanges de ceux-ci.

3. Procédé selon la revendication 2,
**caractérisé en ce que**
comme composé polaire ayant des propriétés complexantes, chélatantes, on utilise de l'acétylacétone et comme alcoolate de zirconium, le n-propylate de zirconium.

4. Procédé selon les revendications 1 à 3,
**caractérisé en ce qu'**
on dissout la poudre contenant de l'oxyde de zirconium dans un solvant choisi dans le groupe consistant en les alcools, les diols, les éthers de diol, les amines et l'eau ou les mélanges de ceux-ci.

5. Procédé selon la revendication 4,
**caractérisé en ce qu'**
on utilise comme solvant un mélange à base de propanediol, de triéthanolamine et d'eau.

6. Procédé selon les revendications 1 à 5,
**caractérisé en ce que**
comme substrat, on utilise des substrats en verre, en céramique et/ou en métal.

7. Procédé selon la revendication 6,
**caractérisé en ce que**
comme substrat on utilise du verre borosilicaté.

8. Procédé selon les revendications 1 à 6,
**caractérisé en ce qu'**
on utilise comme substrat un échantillon plat ou un tube.

9. Procédé selon les revendications 1 à 8,
**caractérisé en ce qu'**
on ajoute au sol des adjuvants en particulier des polyéthylèneglycols.

10. Poudre contenant de l'oxyde de zirconium destinée à la déposition de couches d'oxyde de zirconium accessible par :
a) mise en réaction d'un alcoolate de zirconium avec une dicétone,
b) chauffage de la solution,
c) mélange de la solution avec de l'eau, le cas échéant en présence d'un catalyseur,
d) concentration de la solution jusqu'à obtention d'une poudre.

11. Poudre contenant de l'oxyde de zirconium selon la revendication 10,
**caractérisée en ce qu'**
elle possède une teneur en oxyde de zirconium allant de 30 à 55 % en poids.

12. Solution de revêtement pour la préparation de couches d'oxyde de zirconium comprenant une solution colloïdale de la poudre contenant de l'oxyde de zirconium selon la revendication 10 ou 11, dans un alcool, un diol, une amine, de l'eau ou un mélange de ceux-ci.

13. Solution du revêtement selon la revendication 12,
**caractérisée en ce qu'**
après la dissolution de la poudre contenant de l'oxyde de zirconium, on lui a ajouté un alcoolate de silicium de formule générale Si (OR)₄ dans laquelle les restes R sont identiques ou différents et représentent des restes alkyle ou alkényle à chaîne droite, à chaîne ramifiée ou cyclique, ayant de 1 à 10 atomes de carbone, qui possèdent le cas échéant une ou plusieurs fonctions carbonyle et/ou ester et/ou carboxyle.

14. Solution de revêtement selon la revendication 12 ou 13,
**caractérisée en ce qu'**
elle comprend en supplément des polymères solubles, en particulier des polyéthylène glycols.

15. Solution de revêtement selon les revendications allant de 12 à 14,
**caractérisée en ce qu'**
elle contient 15 % en poids de ZrO₂.

16. Solution de revêtement selon les revendications allant de 12 à 15,
**caractérisée en ce que**
le mélange de solvants comprend du propane diol, de la triéthanolamine et de l'eau.

17. Solution de revêtement selon la revendication 16,
**caractérisée en ce que**
le rapport pondéral du propane diol, de la triéthanolamine et de l'eau est de 60 : 10 : 30.

18. Solution de revêtement selon les revendications 12 à 14,
**caractérisée en ce que**
le mélange de solvant comprend du 1,5-pentane diol et de l'éthanol dans un rapport pondéral de 5/95 à 45/55, et la teneur en matières solides du sol est de à 5 à 10 % en poids de ZrO₂.

19. Utilisation de la poudre contenant de l'oxyde de zirconium selon la revendication 10 ou 11, ou de la solution de revêtement selon les revendications 12 à 18,
en vue de la préparation de couches microstructurées.
